# EUROPÄISCHE PATENTSCHRIFT

(11) **EP 2 442 990 B1**
(45) Veröffentlichungstag und Bekanntmachung des Hinweises auf die Patenterteilung: **01.04.2015**
(21) Anmeldenummer: 10737470.4
(22) Anmeldetag: 17.06.2010
(51) Int. Cl.: B60D 1/06, B60D 1/30, B60D 1/58

(54) **KUPPLUNGSSCHLOSS FÜR EINE ANHÄNGERKUPPLUNG**
COUPLING LOCK FOR A TRAILER COUPLING
DISPOSITIF DE VERROUILLAGE POUR ACCOUPLEMENT DE REMORQUE

(30) Priorität: 19.06.2009 DE 102009027036
(43) Veröffentlichungstag der Anmeldung: 25.04.2012
(73) Patentinhaber: ZF Friedrichshafen AG, 88038 Friedrichshafen (DE)
(72) Erfinder: ALBERS, Ingo, Dr., 49152 Bad Essen (DE); ELBERS, Christoph, Dr., 32351 Dielingen (DE); SPRATTE, Joachim, 49090 Osnabrück (DE); MÄTZOLD, Katharina, 49163 Bohmte (DE)
(86) Internationale Anmeldenummer: PCT/DE2010/050038
(87) Internationale Veröffentlichungsnummer: WO 2010/145646

(56) Entgegenhaltungen:
- WO-A2-2006/133682
- DE-A1- 10 334 000
- US-A1- 2006 071 448

## Beschreibung

Die Erfindung betrifft ein Kupplungsschloss für eine Anhängerkupplung, mit einer Aufnahme, in die ein Kupplungsglied eingesetzt oder einsetzbar ist, und einer mit der Aufnahme verbundenen Winkelmesseinrichtung, mittels welcher eine Verdrehung der Aufnahme relativ zu dem Kupplungsglied um eine Drehachse erfasst wird oder werden kann.

Eine Anhängerkupplung für ein Gespann aus Zugfahrzeug und Anhängerfahrzeug weist in der Regel ein Kupplungsschloss mit einer Aufnahme auf, in die ein Kupplungsglied einsetzbar ist. Das Kupplungsschloss und das Kupplungsglied bilden dabei eine gelenkige Verbindung, so dass das Zugfahrzeug relativ zu dem Anhängerfahrzeug einschwenken kann, was z.B. bei einer Kurvenfahrt des Gespanns erforderlich ist. Dabei ist das Kupplungsschloss an einem der Fahrzeuge des Gespanns und das Kupplungsglied an einem anderen der Fahrzeuge des Gespanns befestigt. Handelt es sich bei dem Zugfahrzeug um einen Personenkraftwagen, so ist das Kupplungsglied in der Regel an dem Zugfahrzeug befestigt und weist einen Kugelkopf auf, der in die als Kugelpfanne ausgebildete Aufnahme des Kupplungsschlosses eingreift, welches an der Deichsel des Anhängerfahrzeugs befestigt ist. Bisher ist keine serienreife Lösung zur Sensierung des Knickwinkels zwischen dem Kupplungsglied und dem Kupplungsschloss verfügbar, der auch als Gespannwinkel bezeichnet wird. Bei Versuchen zur Gespannstabilisierung wird der Gespannwinkel z.B. mit einer Anordnung aus Seilzugpotentiometern ermittelt. Diese oder andere Sensoren zur Längenmessung (Ultraschall, Laser, Radar) messen den Abstand zwischen dem Heckstoßfänger des Zugfahrzeugs und einer geeigneten Frontfläche des Anhängerfahrzeugs. Dieser Abstand liegt außerhalb der Fahrzeugmitte und verändert sich in Abhängigkeit vom Gespannwinkel. Die translatorische Längenänderung des Abstands wird mittels eines Rechners in ein rotatorisches Winkelsignal umgerechnet. Der Nachteil daran ist, dass durch derartige Messaufbauten das An- und Abkuppeln des Anhängerfahrzeugs nicht mehr möglich oder deutlich erschwert ist, da die Messaufbauten Teilsysteme sowohl am Zugfahrzeug als auch am Anhängerfahrzeug aufweisen, die unter Umständen sogar mechanisch miteinander verbunden sind. Ferner sind diese Messaufbauten in der Regel nicht zum Betrieb unter widrigen Umwelteinflüssen (Feuchtigkeit, Temperaturen) geeignet.

Ein gattungsgemäßes Kupplungsschloß wird im Dokument DE 103 34 000 A1 gezeigt.

Ausgehend hiervon liegt der Erfindung die Aufgabe zugrunde, das eingangs genannte Kupplungsschloss derart weiterzubilden, dass ein Ankuppeln und ein Abkuppeln auf einfache Weise möglich sind.

Diese Aufgabe wird erfindungsgemäß mit einem Kupplungsschloss nach Anspruch 1 gelöst. Bevorzugte Weiterbildungen der Erfindung sind in den Unteransprüchen gegeben.

Das erfindungsgemäße Kupplungsschloss für eine Anhängerkupplung weist eine Aufnahme, in die ein Kupplungsglied eingesetzt oder einsetzbar ist, eine mit der Aufnahme verbundene Winkelmesseinrichtung, mittels welcher eine Verdrehung der Aufnahme relativ zu dem Kupplungsglied um eine Drehachse erfasst wird oder werden kann, und einen elastisch mit der Aufnahme verbundenen, magnetischen Haftkörper auf, der, insbesondere im gekuppelten Zustand, magnetisch an dem Kupplungsglied anhaftet oder anhaften kann und die Winkelmesseinrichtung betätigt oder betätigen kann.

Im gekuppelten Zustand, d.h. in einem Zustand, in dem das Kupplungsglied in die Aufnahme eingesetzt ist, haftet der Haftkörper magnetisch an dem Kupplungsglied vorzugsweise derart an, dass er eine Verdrehung des Kupplungsglieds relativ zu der Aufnahme um die Drehachse auf die Winkelmesseinrichtung und/oder auf ein Betätigungsglied der Winkelmesseinrichtung überträgt und diese dadurch betätigt. Die Winkelmesseinrichtung kann somit die Verdrehung erfassen und zur weiteren Verarbeitung an eine Auswerteeinrichtung abgeben, wobei die erfasste Verdrehung vorzugsweise in Form eines oder mehrerer elektrischer Signale von der Winkelmesseinrichtung an die Auswerteeinrichtung abgegeben wird.

Vorzugsweise wird beim Ankuppeln die Verbindung zwischen dem magnetischen Haftkörper und dem Kupplungsglied aufgrund der magnetischen Anziehung zwischen dem Haftkörper und dem Kupplungsglied automatisch hergestellt. Beim Abkuppeln wird hingegen der Haftkörper von dem Kupplungsglied bevorzugt automatisch abgezogen. Das Ankuppeln und das Abkuppeln sind somit relativ einfach möglich. Ferner kann das Kupplungsglied im Vergleich zu einem herkömmlichen Kupplungsglied vorzugsweise unverändert bleiben.

Unter Ankuppeln und/oder Kuppeln soll verstanden werden, dass das Kupplungsglied mit der Aufnahme in Eingriff gebracht wird, insbesondere in diese eingesetzt wird. Unter Abkuppeln soll verstanden werden, dass Kupplungsglied mit der Aufnahme außer Eingriff gebracht wird, insbesondere aus dieser entfernt wird.

Im gekuppelten Zustand haftet der magnetische Haftkörper magnetisch insbesondere derart fest an dem Kupplungsglied an, dass zwischen dem Haftkörper und dem Kupplungsglied eine drehfeste und/oder körperfeste Verbindung ausgebildet ist oder werden kann. Diese drehfeste Verbindung ist vorzugsweise eine reibschlüssige Verbindung, wobei die für diese Verbindung erforderliche Kraft als Magnetkraft von dem magnetischen Haftkörper aufgebracht wird. Da aufgrund unregelmäßiger Fahrbahnverhältnisse auch andere Bewegungen zwischen dem Kupplungsglied und der Aufnahme als die Verdrehung um die Drehachse austreten können, ist der magnetische Haftkörper mit der Aufnahme elastisch verbunden. Diese anderen Bewegungen sind im Vergleich zu maximal auftretenden Verdrehungen um die Drehachse aber relativ gering.

Das Kupplungsglied besteht bevorzugt aus Magnetwerkstoff, zumindest in dem Bereich, in dem der magnetische Haftkörper an dem Kupplungsglied magnetisch anhaftet oder anhaften kann.

Bei der Drehachse handelt es sich bevorzugt um eine Hochachse, insbesondere um eine Achse, die in Richtung der Hochachse des Anhängerfahrzeugs und/oder des Zugfahrzeugs verläuft.

Die elastische Verbindung zwischen der Aufnahme und dem magnetischen Haftkörper wird bevorzugt mittels einer Halterung realisiert, die vorzugsweise eine elastische Halterung bildet und insbesondere in Richtung der Drehachse elastisch ist. Mittels der Halterung ist der magnetische Haftkörper bevorzugt um die Drehachse drehbar an der Aufnahme gelagert.

Die Halterung umfasst bevorzugt ein den magnetischen Haftkörper drehbar haltendes Drehlager und/oder vorzugsweise einen elastischen Körper, der z.B. aus Gummi oder aus Kunststoff besteht und/oder als Feder ausgebildet ist. Bevorzugt ist das Drehlager mittels des elastischen Körpers elastisch mit der Aufnahme verbunden. Der elastische Körper ist z.B. in Form eines Balgs ausgebildet.

Gemäß einer Ausgestaltung der Erfindung weist das Drehlager ein fest, insbesondere stoffschlüssig, mit dem elastischen Körper verbundenes Lagerteil und einen an diesem um die Drehachse drehbar gelagerten Träger auf, der bevorzugt den magnetischen Haftkörper trägt. Der magnetische Haftkörper ist vorzugsweise fest, insbesondere starr, mit dem Träger verbunden. Damit das Lagerteil und der Träger nicht außer Eingriff geraten können, ist der Träger insbesondere axial an dem Lagerteil gesichert. Der Ausdruck "axial" steht hierbei insbesondere für die Richtung der Drehachse. Bevorzugt ist das Drehlager ein Gleitlager.

Das Lagerteil weist bevorzugt eine Hülse auf, in welcher vorzugsweise der Träger sitzt. Die Hülse bildet insbesondere eine Gleithülse oder Gleitbuchse und ist vorzugsweise zylindrisch ausgebildet. Bevorzugt umfasst die Hülse wenigstens einen radialen Vorsprung, der in eine ringoder teilringförmige Ausnehmung des Trägers eingreift. Der Ausdruck "radial" steht hierbei für eine Richtung senkrecht zur Drehachse. Es können rings der Drehachse mehrere, radiale Vorsprünge an der Hülse vorgesehenen sein, die in die Ausnehmung eingreifen. Bevorzugt ist der radiale Vorsprung aber ringförmig ausgebildet. Insbesondere ist der radiale Vorsprung ein nach innen ragender Vorsprung. Die Hülse besteht z.B. aus Metall oder Kunststoff.

Die Winkelmesseinrichtung weist vorzugsweise einen Drehwinkelsensor auf, der durch das Betätigungsglied betätigt wird oder werden kann. Der Drehwinkelsensor ist bevorzugt fest, insbesondere starr mit der Aufnahme verbunden. Ferner ist das Betätigungsglied bevorzugt fest, insbesondere starr mit dem magnetischen Haftkörper verbunden.

Gemäß einer Weiterbildung der Erfindung umfasst die Winkelmesseinrichtung einen vorzugsweise fest, insbesondere starr mit dem Träger verbundenen Messmagneten und einen mit der Aufnahme vorzugsweise fest, insbesondere starr verbundenen Magnetfeldsensor, der von dem Magnetfeld des Messmagneten durchsetzt oder durchsetzbar ist. Der Magnetfeldsensor bildet insbesondere den Drehwinkelsensor, und der Messmagnet bildet insbesondere das Betätigungsglied. Es ist aber auch eine umgekehrte Anordnung möglich, sodass alternativ die Winkelmesseinrichtung einen vorzugsweise fest, insbesondere starr mit der Aufnahme verbundenen Messmagneten und einen mit dem Träger vorzugsweise fest, insbesondere starr verbundenen Magnetfeldsensor umfasst, der von dem Magnetfeld des Messmagneten durchsetzt oder durchsetzbar ist.

Im gekuppelten Zustand wird durch eine Drehung des Kupplungsglieds relativ zu der Aufnahme um die Drehachse der Messmagnet relativ zu dem Magnetfeldsensor, insbesondere um die Drehachse, gedreht, so dass eine Änderung des von dem Messmagnet hervorgerufenen Magnetfelds am Ort des Magnetfeldsensors eintritt. Diese Änderung des Magnetfelds ist mit-dem Magnetfeldsensor erfassbar. Der Messmagnet ist insbesondere quer zur Drehachse magnetisiert, so dass die durch eine Verdrehung hervorgerufene Änderung des Magnetfelds am Ort des Magnetfeldsensors besonders deutlich ist. Der Messmagnet und der Magnetfeldsensor sind bevorzugt im Abstand zueinander entlang der Drehachse angeordnet. Ein geeigneter Magnetfeldsensor ist z.B. aus den Druckschriften EP 0 947 846 B1 und EP 1 182 461 A2 bekannt.

Damit der Träger das Magnetfeld des Messmagneten möglichst wenig beeinträchtigt, ist der Träger bevorzugt ganz oder teilweise aus einem nicht-magnetischen Werkstoff hergestellt. Beispielsweise besteht der Träger aus Kunststoff, aus Aluminium, aus Magnesium oder aus einem nichtferromagnetischen Stahl. In diesem Fall kann der Messmagnet direkt an dem Träger befestigt sein. Gemäß einer Alternative ist der Messmagnet unter Zwischenschaltung eines nicht-magnetischen Materials, z.B. Kunststoff, an dem Träger befestigt. In diesem Fall kann der Träger auch aus Magnetwerkstoff bestehen. Der Messmagnet ist bevorzugt ein Dauermagnet, kann aber auch als Elektromagnet ausgebildet sein.

Damit die magnetische Haftung des magnetischen Haftkörpers an dem Kupplungsglied möglichst groß ist, ist der magnetische Haftkörper bevorzugt mit einem seiner Pole oder mit beiden Polen zu dem Kupplungsglied hin ausgerichtet. Der magnetische Haftkörper umfasst einen Haftmagnet, der insbesondere ein Dauermagnet ist, alternativ aber auch als Elektromagnet ausgebildet sein kann. Insbesondere ist der Haftmagnet in Richtung der Drehachse magnetisiert.

Gemäß einer bevorzugten Weiterbildung der Erfindung umfasst der magnetische Haftkörper einen zum Kupplungsglied hin offenen Topf aus Magnetwerkstoff, in dem der Haftmagnet sitzt. Somit ist es möglich, auch den dem Kupplungsglied abgewandten Pol des Haftmagneten über den die Topföffnung begrenzenden Topfrand auf das Kupplungsglied hin auszurichten. Hierdurch wird die magnetische Haftung des magnetischen Haftkörpers an dem Kupplungsglied erhöht. Der Topfboden steht dabei vorzugsweise im unmittelbaren Kontakt mit dem dem Kupplungsglied abgewandten Pol des Haftmagneten. Zwischen dem Haftmagneten und der diesen umringenden Wandung des Topfes ist bevorzugt ein Spalt vorgesehen, der insbesondere ein Luftspalt ist, aber auch mit einem nicht-magnetischen Material ganz oder teilweise gefüllt sein kann. Der Spalt ist insbesondere ein Ringspalt. Bevorzugt besteht der Topf aus Stahl.

Der Haftmagnet kann direkt auf dem Kupplungsglied aufsitzen. Bevorzugt ist der Haftmagnet aber, insbesondere mit seinem dem Kupplungsglied zugewandten Pol, gegenüber dem die Topföffnung begrenzenden Topfrand zurückgesetzt, so dass der Haftmagnet selbst nicht mit dem Kupplungsglied in unmittelbaren Kontakt tritt oder treten kann. Hierdurch wird der Haftmagnet vor mechanischen Belastungen geschont. Der die Topföffnung begrenzende Rand des Topfes hingegen sitzt bevorzugt unmittelbar auf dem Kupplungsglied auf. Der Topf ist vorzugsweise fest, insbesondere starr, mit dem Träger verbunden.

Der Begriff Magnetwerkstoff steht für einen beliebigen magnetischen Werkstoff. Insbesondere steht der Begriff Magnetwerkstoff für einen ferromagnetischen Werkstoff. Es ist z.B. aber auch ein ferrimagnetischer Werkstoff als Magnetwerkstoff einsetzbar.

Das Kupplungsglied ist insbesondere um die Drehachse drehbar in die Aufnahme eingesetzt oder einsetzbar. Vorzugsweise ist das Kupplungsglied auch um wenigstens eine quer zur Drehachse verlaufende Schwenkachse schwenkbar in die Aufnahme eingesetzt oder einsetzbar.

Gemäß einer Weiterbildung der Erfindung umfasst das Kupplungsglied einen Kugelkopf, wobei die Aufnahme eine Kugelpfanne aufweist, in welcher der Kugelkopf sitzt oder sitzen kann. Der Kugelkopf ist insbesondere gelenkig in die Kugelpfanne eingesetzt oder einsetzbar, sodass der Kugelkopf und die Kugelpfanne ein Kugelgelenk bilden. Somit ist das erfindungsgemäße Kupplungsschloss zusammen mit einem handelsüblichen Kugelkopf für eine-Anhängerkupplung für einen Personenkraftwagen einsetzbar. Der Kugelkopf weist bevorzugt einen Durchmesser von 50 mm auf. Ferner weist der Kugelkopf an seinem der Kugelpfanne zugewandten Ende, welches üblicherweise das obere Ende des Kugelkopfes ist, vorzugsweise eine Abplattung auf, auf die der magnetische Haftkörper aufsitzt oder aufsetzen kann. Hierdurch wird die magnetische Verbindung zwischen dem magnetischen Haftkörper und dem Kugelkopf verbessert. Dabei ist besonders vorteilhaft, dass diese Abplattung in der Regel bei handelsüblichen Kugelköpfen bereits vorgesehen ist. Der Kugelkopf besteht bevorzugt aus Magnetwerkstoff.

Die Aufnahme kann an einem Zugfahrzeug und das Kupplungsglied an einem Anhängerfahrzeug befestigt sein. Bevorzugt ist aber die Aufnahme an einem Anhängerfahrzeug, insbesondere an dessen Deichsel, und das Kupplungsglied an einem Zugfahrzeug, insbesondere an dessen Fahrgestell oder Fahrzeugaufbau, befestigt. Das Zugfahrzeug ist vorzugsweise ein Kraftfahrzeug, insbesondere ein Personenkraftwagen.

Die Winkelmesseinrichtung ist bevorzugt mit einer Auswerteeinrichtung elektrisch verbunden, mittels welcher der Verdrehwinkel des Kupplungsglieds relativ zu der Aufnahme um die Drehachse bestimmbar ist. Insbesondere ist mittels der Auswerteeinrichtung der Knickwinkel eines aus dem Zugfahrzeug und dem Anhängerfahrzeug gebildeten Gespanns ermittelbar. Dabei ist unter dem Knickwinkel insbesondere der Winkel zwischen der Längsachse des Zugfahrzeugs und der Längsachse des Anhängerfahrzeugs zu verstehen, wobei der Knickwinkel insbesondere in einer zur Drehachse senkrechten Ebene liegt. Liegt die Längsachse des Anhängerfahrzeugs z.B. in einer zur Drehachse senkrechten Ebene, so ist der Knickwinkel bevorzugt der Winkel zwischen der Längsachse des Anhängerfahrzeugs und der Projektion der Längsachse des Zugfahrzeugs auf diese Ebene. Die Ebene ist in der Regel parallel zur Fahrbahnebene.

Gemäß einer Ausgestaltung der Erfindung wird somit eine deichselseitige Messung des Gespannwinkels (Knickwinkels) ermöglicht, wobei die Winkelmesseinrichtung im anhängerseitigen Kupplungsschloss befestigt ist. Im oberen Bereich des Kupplungsschlosses wird zentral über der Kugelaufnahme (Aufnahme oder Kugelpfanne) die Winkelmesseinrichtung eingebracht. Diese Vorrichtung besitzt unter anderem einen magnetischen Haftkörper an der unteren Seite der Winkelmesseinrichtung, welcher über ein elastisches Kunststoffteil mit einem an der Aufnahme befestigten Gehäuse der Winkelmesseinrichtung verbunden ist. Beim Kuppeln des Kupplungsschlosses mit dem Kupplungsglied wird der magnetische Haftkörper in die Nähe des Kugelkopfes geführt. Durch die Magnetkraft des magnetischen Haftkörpers wird eine Verbindung zwischen diesem und dem Kugelkopf hergestellt, so dass der magnetische Haftkörper fortan magnetisch, körperfest mit dem Kugelkopf verbunden ist. Der Kugelkopf weist eine genormte Abplattung auf, auf die der magnetische Haftkörper aufsetzen kann. Somit wird eine relative Drehung zwischen dem Kugelkopf und dem Kupplungsschloss in die Winkelmesseinrichtung transferiert. Dort wird diese Relativbewegung, bei der es sich überwiegend um eine Rotation um eine vertikale Achse (Drehachse) durch den Kugelkopf handelt, mit einem Drehwinkelsensor im Kupplungsschloss eindeutig erfasst. Insbesondere handelt es sich bei diesem Drehwinkelsensor um einen Magnetfeldsensor. Der Drehwinkel wird mittels des Sensors erfasst und zur weiteren Verarbeitung in Form eines elektrischen Signals an eine Auswerteeinrichtung weitergeleitet. Beim Abkuppeln wird der magnetische Haftkörper zusammen mit dem Kupplungsschloss von dem Kugelkopf automatisch abgezogen.

Die Erfindung eröffnet die Möglichkeit einer serientauglichen Messung des Gespannwinkels. Der Gespannwinkel kann z.B. Systemen zur fahrdynamischen Stabilisierung des Gespanns und/oder zur Fahrassistenz zur Verfügung gestellt werden. Ferner kann der Fahrzeugführer über den Gespannwinkel, z.B. mittels einer Anzeige im Insassenraum des Zugfahrzeugs, informiert werden. Auch können Knickwinkelschwingungen erfasst werden, die auf einen instabilen Gespannzustand (Pendeln) hindeuten können.

Die Erfindung betrifft ferner eine Anhängerkupplung mit einem erfindungsgemäßen Kupplungsschloss, wobei der magnetische Haftkörper magnetisch an dem Kupplungsglied anhaftet und die Winkelmesseinrichtung betätigt oder betätigen kann.

Die Erfindung betrifft auch die Verwendung eines erfindungsgemäßen Kupplungsschlosses für eine Anhängerkupplung zwischen einem Zugfahrzeug und einem Anhängerfahrzeug, wobei der magnetische Haftkörper magnetisch an dem Kupplungsglied anhaftet und die Winkelmesseinrichtung betätigt. Insbesondere wird aus der mittels der Winkelmesseinrichtung erfassten Verdrehung der Knickwinkel zwischen der Längsachse des Zugfahrzeugs und der Längsachse des Anhängerfahrzeugs ermittelt.

Die Erfindung wird nachfolgend anhand einer bevorzugten Ausführungsform unter Bezugnahme auf die Zeichnung beschrieben. In der Zeichnung zeigen:
- Fig. 1: eine Draufsicht auf ein aus einem Zugfahrzeug und einem Anhängerfahrzeug bestehendes Gespann und
- Fig. 2: eine Schnittansicht durch die aus Fig. 1 ersichtliche Anhängerkupplung entlang der Schnittlinie A-A.

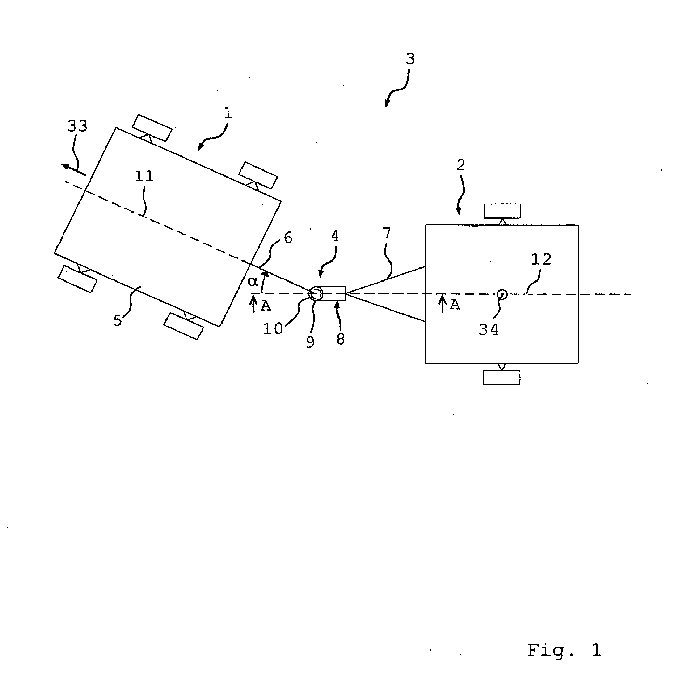

Aus Fig. 1 ist eine Draufsicht auf ein aus einem Zugfahrzeug 1 und einem Anhängerfahrzeug 2 gebildetes Gespann 3 ersichtlich, wobei das Zugfahrzeug 1 über eine Anhängerkupplung 4 gelenkig mit dem Anhängerfahrzeug 2 verbunden ist. Die gewöhnliche Vorwärtsfahrtrichtung des Zugfahrzeugs 1 und/oder des Gespanns 3 ist durch den Pfeil 33 gekennzeichnet. Die Anhängerkupplung 4 weist ein mit dem Fahrgestell oder Fahrzeugaufbau 5 des Zugfahrzeugs 1 starr verbundenes Kupplungsglied 6 und ein an einer Deichsel 7 des Anhängerfahrzeugs 2 befestigtes Kupplungsschloss 8 auf. Das Kupplungsschloss 8 umfasst eine Kugelpfanne 9, in der ein schematisch dargestellter Kugelkopf 10 des Kupplungsglieds 6 sitzt, wobei der Kugelkopf 10 ein in Fahrtrichtung 33 hinteres Ende des Kupplungsglieds 6 bildet. Ferner bildet das Kupplungsschloss 8 ein in Fahrtrichtung 33 vorderes Ende der Deichsel 7.

Der Winkel α zwischen der Längsachse 11 des Zugfahrzeugs 1 und der Längsachse 12 des Anhängerfahrzeugs 2 bildet den sogenannten Knickwinkel oder Gespannwinkel. Der Knickwinkel α liegt insbesondere in einer zur Fahrzeughochrichtung 34 des Anhängerfahrzeugs 2 senkrechten Ebene, wobei die Fahrzeughochrichtung 34 in Fig. 1 senkrecht zur Zeichenebene verläuft.

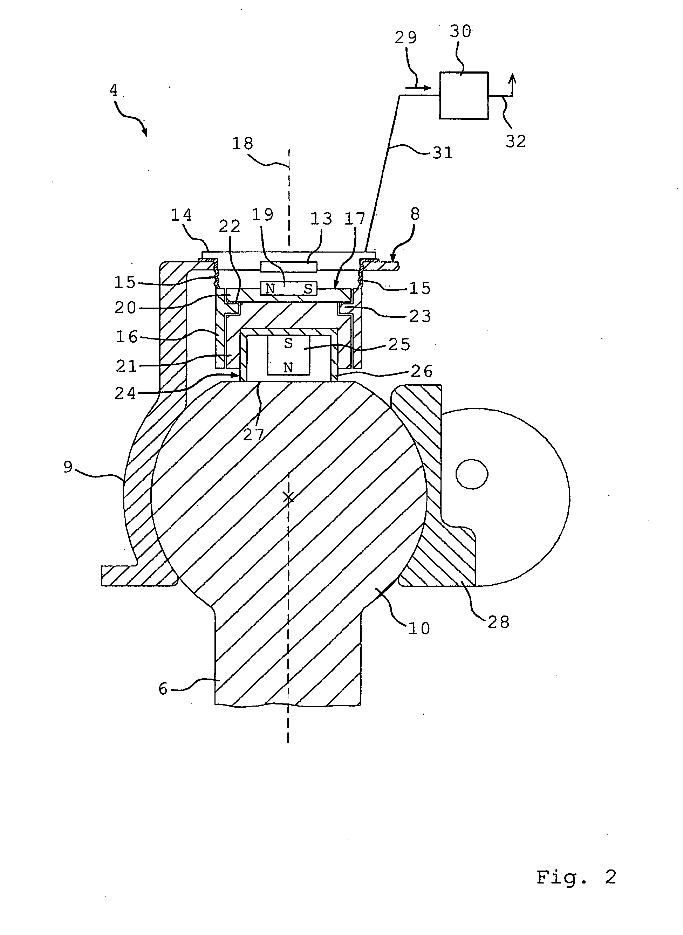

Aus Fig. 2 ist eine Schnittansicht durch die Anhängerkupplung 4 entlang der Längsachse 12 und in Fahrzeughochrichtung 34 ersichtlich, wobei am oberen Ende der Kugelpfanne- 9 ein Magnetfeldsensor 13 angeordnet und mittels eines Gehäuses 14 befestigt ist. An dem Gehäuse 14 ist ein elastischer Balg 15 festgelegt, der eine Gleithülse 16 trägt und stoffschlüssig mit dieser verbunden ist. In der Gleithülse 16 ist ein Träger 17 um eine Drehachse 18 drehbar gelagert, der an seinem oberen, dem Sensor 13 zugewandten Ende einen als Permanentmagnet ausgebildeten Messmagneten 19 trägt. Nord- und Südpol des Messmagneten 19 sind dargestellt, um die quer zur Drehachse 18 ausgerichtete Magnetisierung des Messmagneten 19 zu verdeutlichen. Der aus nicht-magnetischem Werkstoff bestehende Träger 17 weist ein Oberteil 20 und ein an diesem montiertes Unterteil 21 auf, wobei zwischen dem Oberteil 20 und dem Unterteil 21 eine Ringnut 22 eingeschlossen ist, in die ein ringförmiger, radialer Innenvorsprung 23 der Gleithülse 16 eingreift. Der Träger 17 ist dadurch in Richtung der Drehachse 18 an der Gleithülse 16 geschert. Die Drehachse 18 verläuft in Fahrzeughochrichtung 34 und bildet somit eine Hochachse.

An seinem dem Kugelkopf 10 zugewandten, unteren Ende ist an dem Träger 17 ein magnetischer Haftkörper 24 befestigt, der einen Dauermagnet 25 und einen Topf 26 umfasst, in dem der Magnet 25 sitzt. Nord- und Südpol des Magneten 25 sind eingezeichnet, um seine Magnetisierung in Richtung der Drehachse 18 zu verdeutlichen. Der Topf 26 besteht aus Magnetwerkstoff, so dass der Südpol des Magneten 25 an dem dem Kugelkopf 10 zugewandten Rand des Topfes 26 in Erscheinung tritt. Selbstverständlich ist es möglich, Nord- und Südpol zu vertauschen.

Der Rand des Topfes 26 sitzt auf einer Abplattung 27 des Kugelkopfes 10 auf und wird an dieser durch Magnetkraft festgehalten, da auch der Kugelkopf 10 aus Magnetwerkstoff besteht. Es ist erkennbar, dass der Magnet 25 mit seinem Nordpol gegenüber dem unteren Rand des Topfes leicht zurückgesetzt ist, so dass ein direkter Kontakt zwischen dem Magneten 25 und dem Kugelkopf 10 verhindert ist. Ferner ist zwischen dem Magneten 25 und der diesen umringenden Wandung des Topfes 26 ein ringförmiger Luftspalt vorgesehen.

Das Kupplungsschloss 8 umfasst ferner einen betätigbaren Verschluss 28, der in Fig. 2 im verriegelten Zustand dargestellt ist, so dass der Kugelkopf 10 formschlüssig in der Kugelpfanne 9 gehalten ist. Zum Abkuppeln kann der Verschluss 28 von dem Kugelkopf 10 abgerückt werden, sodass das Kupplungsschloss 8 von dem Kugelkopf 10 abgenommen werden kann. In diesem Fall wird auch gleichzeitig der magnetische Haftkörper 24 von dem Kugelkopf 10 getrennt.

Erfolgt im gekuppelten Zustand der Anhängerkupplung 4 eine Drehbewegung des Kugelkopfes 10 relativ zu dem Kupplungsschloss 8 um die Drehachse 18, so dreht der magnetische Haftkörper 24 mit dem Kugelkopf 10 mit. Da der magnetische Haftkörper 24 mittels des Trägers 17 drehfest mit dem Messmagneten 19 verbunden ist, dreht sich auch der Messmagnet 19 mit dem Kugelkopf 10 um die Drehachse 18. Diese Drehung kann mittels des Sensors 13 erfasst werden, der ein die Verdrehung kennzeichnendes elektrisches Signal 29 an eine Auswerteeinrichtung 30 abgibt, mit welcher der Sensor 13 über elektrische Verbindungsleitungen 31 verbunden ist. Mittels der Auswerteeinrichtung 30 wird auf Basis des elektrischen Signals 29 der Knickwinkel α bestimmt.

Gemäß einer ersten Alternative sitzt die Auswerteeinrichtung 30 im Zugfahrzeug 1, so dass die Verbindungsleitung 31 sich von dem Kupplungsschloss 8 bis zu dem Zugfahrzeug 1 erstreckt. Gemäß einer zweiten Alternative sitzt die Auswerteeinrichtung 30 im Anhängerfahrzeug 2, das über elektrische Versorgungsleitungen 32 elektrisch mit dem Zugfahrzeug 1 gekoppelt ist. Dem Zugfahrzeug 1 kann in diesem Fall die Information über den Knickwinkel α über die elektrischen Versorgungsleitungen 32 zur Verfügung gestellt werden.

Gemäß einer Abwandlung der Ausführungsform kann die Kommunikation zwischen dem Sensor 13 und der Auswerteeinrichtung 30 und/oder zwischen der Auswerteeinrichtung 30 und dem Zugfahrzeug 1 auch drahtlos, z.B. per Funk, erfolgen.

Treten aufgrund unregelmäßiger Fahrbahnbedingungen Bewegungen zwischen dem Kupplungsschloss 8 und dem Kugelkopf 10 auf, die von einer Verdrehung um die Drehachse 18 abweichen, z.B. Kippbewegungen zwischen dem Zugfahrzeug 1 und dem Anhängerfahrzeug 2, so werden solche abweichenden Bewegungen von dem elastischen Balg 15 abgefangen, so dass die Winkelmesseinrichtung bzw. die Anordnung aus Magnetfeldsensor 13, elastischem Balg 15, Gleithülse 16, Träger 17, Messmagnet 19 und magnetischem Haftkörper 24 nicht beschädigt wird.

### Bezugszeichenliste

1 Zugfahrzeug
2 Anhängerfahrzeug
3 Gespann
4 Anhängerkupplung
5 Fahrgestell des Zugfahrzeugs
6 Kupplungsglied
7 Deichsel des Anhängerfahrzeugs
8 Kupplungsschloss
9 Kugelpfanne
10 Kugelkopf
11 Längsachse des Zugfahrzeugs
12 Längsachse des Anhängerfahrzeugs
13 Magnetfeldsensor
14 Gehäuse des Magnetfeldsensors
15 elastischer Balg
16 Gleithülse
17 Träger
18 Drehachse
19 Messmagnet
20 Oberteil des Trägers
21 Unterteil des Trägers
22 Ringnut in Träger
23 radialer Vorsprung der Gleithülse
24 magnetischer Haftkörper
25 Haftmagnet
26 Topf
27 Abplattung
28 Verschluss
29 Signal von Magnetfeldsensor
30 Auswerteeinrichtung
31 elektrische Verbindungsleitung
32 elektrische Versorgungsleitung
33 Fahrtrichtung
34 Fahrzeughochrichtung

## Patentansprüche

1. Kupplungsschloss für eine Anhängerkupplung, mit
einer Aufnahme (9), in die ein Kupplungsglied (6) eingesetzt oder einsetzbar ist,
einer mit der Aufnahme (9) verbundenen Winkelmesseinrichtung (13, 19), mittels welcher eine Verdrehung der Aufnahme (9) relativ zu dem Kupplungsglied (6) um eine Drehachse (18) erfasst wird oder werden kann, gekennzeichnet durch
einen elastisch mit der Aufnahme (9) verbundenen, magnetischen Haftkörper (24), der magnetisch an dem Kupplungsglied (6) anhaftet oder anhaften kann und die Winkelmesseinrichtung (13, 19) betätigt oder betätigen kann.

2. Kupplungsschloss nach Anspruch 1,
gekennzeichnet durch
eine elastische Halterung (15, 16, 17), mittels welcher der magnetische Haftkörper (24) um die Drehachse (18) drehbar an der Aufnahme (9) gelagert ist.

3. Kupplungsschloss nach Anspruch 2,
**dadurch gekennzeichnet, dass**
die Halterung (15, 16, 17) ein den magnetischen Haftkörper (24) drehbar haltendes Drehlager (16, 17) und einen elastischen Körper (15) umfasst, mittels welchem das Drehlager (16, 17) elastisch mit der Aufnahme (9) verbunden ist.

4. Kupplungsschloss nach Anspruch 3,
**dadurch gekennzeichnet, dass**
das Drehlager (16, 17) ein fest mit dem elastischen Körper (15) verbundenes Lagerteil (16) und einen an diesem um die Drehachse (18) drehbar gelagerten Träger (17) umfasst, der axial an dem Lagerteil (16) gesichert ist und den magnetischen Haftkörper (24) trägt.

5. Kupplungsschloss nach Anspruch 4,
**dadurch gekennzeichnet, dass**
das Lagerteil (16) eine Gleithülse mit wenigstens einem radialen Vorsprung (23) umfasst, der in eine ringförmige Ausnehmung (22) des in der Gleithülse sitzenden Trägers (17) eingreift.

6. Kupplungsschloss nach Anspruch 4 oder 5,
**dadurch gekennzeichnet, dass**
die Winkelmesseinrichtung (13, 19) einen fest mit dem Träger (17) verbundenen Messmagnet (19.) und einen mit der Aufnahme (9) fest verbundenen Magnetfeldsensor (13) umfasst, der von dem Magnetfeld des Messmagneten (19) durchsetzt oder durchsetzbar ist.

7. Kupplungsschloss nach Anspruch 6,
**dadurch gekennzeichnet, dass**
der Messmagnet (19) quer zur Drehachse (18) magnetisiert oder magnetisierbar ist.

8. Kupplungsschloss nach einem der Ansprüche 4 bis 7,
**dadurch gekennzeichnet, dass**
der Träger (17) ganz oder teilweise aus einem nicht-magnetischen Werkstoff besteht.

9. Kupplungsschloss nach einem der vorangehenden Ansprüche,
**dadurch gekennzeichnet, dass**
der magnetische Haftkörper (24) einen zum Kupplungsglied (6) hin offenen Topf (26) aus Magnetwerkstoff aufweist, in dem ein Haftmagnet (25) sitzt.

10. Kupplungsschloss nach Anspruch 9,
**dadurch gekennzeichnet, dass**
der Haftmagnet (25) gegenüber dem die Topföffnung begrenzenden Rand des Topfes (26) zurückgesetzt ist.

11. Kupplungsschloss nach einem der vorangehenden Ansprüche,
**dadurch gekennzeichnet, dass**
das Kupplungsglied (6) einen Kugelkopf (10) umfasst und die Aufnahme (9) eine Kugelpfanne aufweist, in welcher der Kugelkopf (10) sitzt oder sitzen kann.

12. Kupplungsschloss nach Anspruch 11,
**dadurch gekennzeichnet, dass**
der Kugelkopf (10) an seinem der Kugelpfanne (9) zugewandten Ende eine Abplattung (27) aufweist, auf die der magnetische Haftkörper (24) aufsitzt oder aufsetzen kann.

13. Kupplungsschloss nach einem der vorangehenden Ansprüche,
**dadurch gekennzeichnet, dass**
die Aufnahme (9) an der Deichsel (7) eines Anhängerfahrzeugs (2) und das Kupplungsglied (6) am Fahrgestell oder Fahrzeugaufbau (5) eines Zugfahrzeugs (1) befestigt ist.

14. Kupplungsschloss nach Anspruch 13,
**dadurch gekennzeichnet, dass**
mit der Winkelmessvorrichtung (13, 19) eine Auswerteeinrichtung (30) elektrisch verbunden ist, mittels welcher der Knickwinkel (α) zwischen der Längsachse (11) des Zugfahrzeugs (1) und der Längsachse (12) des Anhängerfahrzeugs (2) ermittelt wird oder werden kann.

15. Verwendung eines Kupplungsschlosses (8) nach einem der vorangehenden Ansprüche für eine Anhängerkupplung (4) zwischen einem Zugfahrzeug (1) und einem Anhängerfahrzeug (2), wobei der magnetische Haftkörper (24) magnetisch an dem Kupplungsglied (6) anhaftet und die Winkelmesseinrichtung (13, 19) betätigt, und wobei aus der mittels der Winkelmesseinrichtung erfassten Verdrehung der Knickwinkel (α) zwischen der Längsachse (11) des Zugfahrzeugs (1) und der Längsachse (12) des Anhängerfahrzeugs (2) ermittelt wird.

## Claims

1. Coupling lock for a trailer coupling, with a receptacle (9) into which a coupling member (6) is inserted or insertable,
an angle measurement device (13, 19) which is connected to the receptacle (9) and by means of which rotation of the receptacle (9) in relation to the coupling member (6) about an axis of rotation (18) is or can be detected,
**characterized by**
a magnetic adhesion body (24) which is connected elastically to the receptacle (9) and which adheres or can adhere magnetically to the coupling member (6) and actuates or can actuate the angle measurement device (13, 19).

2. Coupling lock according to Claim 1, **characterized by** an elastic mounting (15, 16, 17), by means of which the magnetic adhesion body (24) is mounted on the receptacle (9) rotatably about the axis of rotation (18).

3. Coupling lock according to Claim 2, **characterized in that** the mounting (15, 16, 17) comprises a rotary bearing (16, 17), holding the magnetic adhesion body (24) rotatably, and an elastic body (15), by means of which the rotary bearing (16, 17) is connected elastically to the receptacle (9).

4. Coupling lock according to Claim 3, **characterized in that** the rotary bearing (16, 17) comprises a bearing part (16), connected fixedly to the elastic body (15), and a carrier (17), which is mounted, on the said bearing part rotatably about the axis of rotation (18) and which is secured axially to the bearing part (16) and carries the magnetic adhesion body (24).

5. Coupling lock according to Claim 4, **characterized in that** the bearing part (16) comprises a sliding sleeve having at least one radial projection (23) which engages into a ring-shaped recess (22) of the carrier (17) seated in the sliding sleeve.

6. Coupling lock according to Claim 4 or 5, **characterized in that** the angle measurement device (13, 19) comprises a measuring magnet (19), connected fixedly to the carrier (17), and a magnetic-field sensor (13) which is connected fixedly to the receptacle (9) and which is penetrated or penetrable by the magnetic field of the measuring magnet (19).

7. Coupling lock according to Claim 6, **characterized in that** the measuring magnet (19) is magnetized or magnetizable transversely to the axis of rotation (18).

8. Coupling lock according to one of Claims 4 to 7, **characterized in that** the carrier (17) consists completely or partially of a non-magnetic material.

9. Coupling lock according to one of the preceding claims, **characterized in that** the magnetic adhesion body (24) has a pot (26) which is open towards the coupling member (6) and is made from magnetic material and in which the adhesion magnet (25) is seated.

10. Coupling lock according to Claim 9, **characterized in that** the adhesion magnet (25) is set back with respect to that edge of the pot (26) which delimits the pot orifice.

11. Coupling lock according to one of the preceding claims, **characterized in that** the coupling member (6) comprises a spherical head (10), and the receptacle (9) has a ball socket in which the spherical head (10) is or can be seated.

12. Coupling lock according to Claim 11, **characterized in that** the spherical head (10) has, at its end facing the ball socket (9), a flattening (27), onto which the magnetic adhesion body (24) is seated or can be seated.

13. Coupling lock according to one of the preceding claims, **characterized in that** the receptacle (9) is fastened to the drawbar (7) of a trailer vehicle (2), and the coupling member (6) is fastened to the chassis or vehicle body (5) of a traction vehicle (1).

14. Coupling lock according to Claim 13, **characterized in that** the angle measurement device (13, 19) has connected electrically to it an evaluation device (30), by means of which the bending angle (α) between the longitudinal axis (11) of the traction vehicle (1) and the longitudinal axis (12) of the trailer vehicle (2) is or can be determined.

15. Use of a coupling lock (8) according to one of the preceding claims for a trailer coupling (4) between a traction vehicle (1) and a trailer vehicle (2), the magnetic adhesion body (24) adhering magnetically to the coupling member (6) and actuating the angle measurement device (13, 19), and the bending angle (α) between the longitudinal axis (11) of the traction vehicle (1) and the longitudinal axis (12) of the trailer vehicle (2) being determined from the rotation detected by means of the angle measurement device.

## Revendications

1. Dispositif de verrouillage d'accouplement pour un accouplement de remorque, comprenant
un logement (9) dans lequel un organe d'accouplement (6) est inséré ou peut être inséré, un dispositif de mesure d'angle (13, 19) relié au logement (9), au moyen duquel dispositif de mesure d'angle une rotation du logement (9) par rapport à l'organe d'accouplement (6) autour d'un axe de rotation (18) est ou peut être détectée, **caractérisé par**
un corps adhérent magnétique (24) relié élastiquement au logement (9), lequel corps adhérent adhère ou peut adhérer magnétiquement à l'organe d'accouplement (6) et actionne ou peut actionner le dispositif de mesure d'angle (13, 19).

2. Dispositif de verrouillage d'accouplement selon la revendication 1,
**caractérisé par**
un élément de retenue élastique (15, 16, 17), au moyen duquel le corps adhérent magnétique (24) est monté sur le logement (9) de manière rotative autour de l'axe de rotation (18).

3. Dispositif de verrouillage d'accouplement selon la revendication 2,
**caractérisé en ce que**
l'élément de retenue (15, 16, 17) comporte un palier de rotation (16, 17) retenant de manière rotative le corps adhérent magnétique (24) et un corps élastique (15), au moyen duquel le palier de rotation (16, 17) est relié élastiquement au logement (9).

4. Dispositif de verrouillage d'accouplement selon la revendication 3,
**caractérisé en ce que**
le palier de rotation (16, 17) comporte une partie de palier (16) reliée fixement au corps élastique (15) et un support (17) monté sur celle-ci de manière rotative autour de l'axe de rotation (18), lequel support est fixé axialement sur la partie de palier (16) et supporte le corps adhérent magnétique (24).

5. Dispositif de verrouillage d'accouplement selon la revendication 4,
**caractérisé en ce que**
la partie de palier (16) comporte une douille coulissante pourvue d'au moins une saillie radiale (23) qui vient en prise dans un évidement annulaire (22) du support (17) reposant dans la douille coulissante.

6. Dispositif de verrouillage d'accouplement selon la revendication 4 ou 5,
**caractérisé en ce que**
le dispositif de mesure d'angle (13, 19) comporte un aimant de mesure (19) relié fixement au support (17) et un capteur de champ magnétique (13) relié fixement au logement (9), qui est traversé ou peut être traversé par le champ magnétique de l'aimant de mesure (19).

7. Dispositif de verrouillage d'accouplement selon la revendication 6,
**caractérisé en ce que**
l'aimant de mesure (19) est magnétisé ou peut être magnétisé transversalement à l'axe de rotation (18).

8. Dispositif de verrouillage d'accouplement selon l'une quelconque des revendications 4 à 7,
**caractérisé en ce que**
le support (17) est constitué entièrement ou partiellement d'un matériau non magnétique.

9. Dispositif de verrouillage d'accouplement selon l'une quelconque des revendications précédentes,
**caractérisé en ce que**
le corps adhérent magnétique (24) comprend un pot (26) en matériau magnétique ouvert en direction de l'organe d'accouplement (6), dans lequel repose un aimant adhérent (25).

10. Dispositif de verrouillage d'accouplement selon la revendication 9,
**caractérisé en ce que**
l'aimant adhérent (25) est en retrait par rapport au bord, limitant l'ouverture de pot, du pot (26).

11. Dispositif de verrouillage d'accouplement selon l'une quelconque des revendications précédentes,
**caractérisé en ce que**
l'organe d'accouplement (6) comporte une tête sphérique (10) et le logement (9) comprend une calotte sphérique dans laquelle la tête sphérique (10) repose ou peut reposer.

12. Dispositif de verrouillage d'accouplement selon la revendication 11,
**caractérisé en ce que**
la tête sphérique (10) comprend, à son extrémité tournée vers la calotte sphérique (9), un aplatissement (27) sur lequel le corps adhérent magnétique (24) repose ou peut reposer.

13. Dispositif de verrouillage d'accouplement selon l'une quelconque des revendications précédentes,
**caractérisé en ce que**
le logement (9) est fixé au timon (7) d'un véhicule remorque (2) et l'organe d'accouplement (6) est fixé au châssis ou à la carrosserie de véhicule (5) d'un véhicule tracteur (1).

14. Dispositif de verrouillage d'accouplement selon la revendication 13,
caractérisé en ce
qu'un dispositif d'évaluation (30) est connecté électriquement au dispositif de mesure d'angle (13, 19), au moyen duquel dispositif d'évaluation l'angle d'articulation (α) entre l'axe longitudinal (11) du véhicule tracteur (1) et l'axe longitudinal (12) du véhicule remorque (2) est ou peut être déterminé.

15. Utilisation d'un dispositif de verrouillage d'accouplement (8) selon l'une quelconque des revendications précédentes pour un accouplement de remorque (4) entre un véhicule tracteur (1) et un véhicule remorque (2), le corps adhérent magnétique (24) adhérant magnétiquement à l'organe d'accouplement (6) et actionnant le dispositif de mesure d'angle (13, 19), et l'angle d'articulation (α) entre l'axe longitudinal (11) du véhicule tracteur (1) et l'axe longitudinal (12) du véhicule remorque (2) étant déterminé à partir de la rotation détectée au moyen du dispositif de mesure d'angle.
